# EUROPEAN PATENT SPECIFICATION

(11) **EP 2 644 762 B1**
(45) Date of publication and mention of the grant of the patent: **18.06.2014**
(21) Application number: 13001631.4
(22) Date of filing: 28.03.2013
(51) Int. Cl.: D04H 1/587, D04H 1/645, D21H 13/36, D21H 23/28

(54) **Method for producing wet-laid non-woven fabrics, in particular non-woven glass fiber fabrics**
Verfahren zur Herstellung von nassgelegtem Vliesstoff, insbesondere Vliesglasfasermatten
Procédé de production d'étoffes non tissées par voie humide, en particulier des étoffes en fibres de verre non tissées

(30) Priority: 31.03.2012 DE 102012006689
(43) Date of publication of application: 02.10.2013
(73) Proprietor: Johns Manville Europe GmbH, 86399 Bobingen (DE)
(72) Inventor: Gleich, Klaus Friedrich, 80127 Highlands Ranch (US); Ketzer, Michael, 97903 Collenberg (DE); Christensen, Bernd Dr., 80111 Englewood (US); Krallmann, Volker, 97956 Werbach (DE)
(74) Representative: Mai, Dörr, Besier

(56) References cited:
- EP-A1- 0 960 864
- EP-A2- 1 544 352
- GB-A- 832 621
- US-A1- 2001 021 448

## Description

The present invention concerns a method for producing wet-laid non-woven, in particular non-woven glass fiber fabrics, which have a very low binder content, as well as the non-woven glass fiber fabrics produced according to this method and the use thereof.

The production of wet-laid non-woven fabric has been known for more than 50 years and uses the methods and devices initially developed for paper manufacturing.

For the production of wet-laid, for example non-woven glass fiber fabrics, the glass fibers are dispersed in a so-called pulper in water, wherein the content of glass fibers is approx. 0.1 - 1 % by weight. Here, one must pay attention to the fact that the the glass fibers are damaged as less as possible during the dispersion, i.e. essentially no fiber breaking occurs. the dispersed glass fibers are temporarily stored in one or more storage vessels. The discharge takes place through the material outlet, wherein the concentration of glass fibers is reduced by a factor 10 to 20. The discharge takes place to a circumferential Fourdrinier wire through which the water is sucked up and the wet-laid non-woven glass fiber fabric is formed. The sucked up water is supplied again to the process, i.e. recycled.

Following this, a binder is applied onto the non-woven glass fiber fabric, which has just been formed, which binder effects consolidation of the non-woven glass fiber fabric after drying resp. hardening so that it can be rolled up resp. post-treated.

Depending on the range of application, the glass fiber materials, glass fiber lengths and glass fiber diameters as well as the weights per unit area and the binder application are set up. In particular during the production of wet-laid non-woven glass fiber fabrics with a low binder content, problems arise, for example, through rupture.

For a number of applications, it is required to apply a binder, which is only partially cross-linked, on non-woven fabrics. In particular for production of such wet-laid non-woven fabrics with a low application of a B-stage binder, significant problems arise during production, since the non-woven fabrics are very sensitive due to the missing strength and can practically not be used in conventional processing tasks.

During production of wet-laid non-woven fabrics, tensile forces arise, which can be compensed, for example, during transfer of the non-woven fabric from the furnace to the winder only through corresponding tensile strength of the non-woven fabric. Furthermore, shearing forces during winding inevitably lead to delamination and decomposition of the non-woven structure in case of unsufficient strength of the non-woven fabric. Enhancement of the tensile strength is of course possible by using completely cross-linked binders. If, however, non-woven fabrics with a very low binder content are required and, besides this, the binder may not be completely cross-linked (B-stage), this solution cannot be realized.

The object of the present invention is therefore to provide a method for the production of wet-laid non-woven fabrics with a low binder application, with which non-woven fabrics for which the binder is still in the B-stage state can by no means be produced and with which handling of these non-woven fabrics is enhanced.

Therefore, the object of the present invention is a continuous method for producing wet-laid non-woven fabrics, comprising the measures of:
(i) dispersing fibers in water,
(ii) applying the fibers dispersed in water onto the top side of a circumferential Fourdrinier wire,
(iii) formation of a wet-laid non-woven fabric through sucking up of the available water from the underside of the circumferential Fourdrinier wire,
(iv) applying a binder and, if necessary, removing of excess binder,
(v) partially drying and partially cross-linking the non-woven fabric impinged with binder,
(vi) rolling up the fabric web received,
   characterized in that
(vii) the binder according to measure (iv) is a B-stage capable binder system and the B-stage capable binder system according to measure (v) is brought to a B-stage state and
(viii) the applied quantity of the B-stage capable binder system in measure (iv) is at most 20 % by weight, preferably 15 % by weight, wherein the value refers to the total weight of the non-woven fabric after complete drying, and
(ix) the B-stage capable binder system comprises at least one B-stage capable binder and one further self-cross-linking binder.

The wet-laid non-woven fabrics produced by means of the method according to the invention have a good mechanical strength along with a low binder content and are to be used in particular for the production of composite materials, in particular composite materials with a low fire load.

### Fibers

The fibers used in measure (i) are discontinuous fibers, i.e. so-called staple fibers resp. chopped fibers. The fiber-forming materials are preferably natural fibers and/or fibers of synthesized or natural polymers, ceramic fibers, carbon fibers, mineral fibers or glass fibers, wherein they can also be used in the form of mixtures.

The mineral and ceramic fibers are aluminosilicate fibers, ceramic fibers, dolomite fibers, wollastonite fibers or fibers of vulcanites, preferably basalt fibers, diabase fibers and/or melaphyre fibers, especially basalt fibers. Diabases and melaphyres are designated collectively as paleobasalts and diabase is also often designated as greenstone.

The average length of the mineral fibers is between 5 and 120 mm, preferably 10 to 90 mm. The average fiber diameter of the mineral fibers is between 5 and 30 µm, preferably between 8 and 24 µm, especially preferably between 8 and 15 µm.

Suitable materials made of synthetized polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether and keto groups such as, e.g., polyetherketones (PEK) and polyetheretherketone (PEEK), polyolefins such as, e.g., polyethylene or polypropylene, cellulose or polybenzimidazoles. In addition to the previously cited synthetic polymers, even those polymers are suited that are spun from solution.

Preferably, however, the fibers consist of melt-spinnable polyesters. The polyester material can, in principle, be any known type suitable for fiber production.

Polyesters containing at least 95 mole % of polyethylene terephthalate (PET) are particularly preferred, especially those composed of unmodified PET.

The single titers of the staple fibers in the non-woven fabric are between 1 and 16 dtex, preferably 2 to 10 dtex. The staple length is 1 to 100 mm, preferably 2 to 500 mm, particularly preferably 2 to 30 mm.

The natural fibers are plant fibers, fibers derived from grasses, straw, wood, bamboo, reed and bast, or fibers of animal origin. The generic term "plant fibers" comprises cotton, kapok or poplar fluff, bast fibers, such as bamboo fiber, hemp, jute, linen or ramie, hart fibers, such as sisal or manila, or fruit fibers, such as coconut. Fibers of animal origin are wool, animal hairs, feathers and silks.

The textile surfaces of fibers of natural polymers are cellulose fibers, such as viscose, or vegetable or animal protein fibers, in particular cellulose fibers.

The average length of the cellulose fibers is between 1 and 25 mm, preferably 2 to 5 mm. The average diameter of the cellulose fibers is between 5 and 50 µm, preferably between 15 and 30 µm.

Suitable glass fibers comprise those manufactured from A-glass, E-glass, S-glass, T-glass or R-glass.

The average length of the glass fibers is preferably between 5 and 120 mm, preferably 10 to 90 mm. The average fiber diameter of the glass fibers is preferably between 5 and 30 µm, in particular between 8 and 24 µm, especially preferably between 10 and 21 µm.

In addition to the previously cited diameters even so-called glass microfibers can be used. The preferred average diameter of the glass microfibers is between 0.1 and 5 µm.

### Fiber dispersion

The measures for dispersion of the fibers used in step (i) are known to those skilled in the art. The exact process conditions depend on the fiber materials and the desired weight per unit area of the non-woven fabric to be formed.

The processes described hereinafter refer to the production of non-woven glass fiber fabrics; however, the corresponding process steps are similar also for other fiber materials are known to those skilled in the art.

Basically, the fibers are dispersed in a so-called pulper in water, wherein in the case of glass fibers the content of the glass fibers is approx. 0.1 % by weight to 1 % by weight.

The dispersed glass fibers are usually temporarily stored in one or more storage vessels, wherein the deposition of the glass fibers must be prevented. This measure is also known to those skilled in the art.

The discharge of the glass fiber/water dispersion resp. the application according to measure (ii) takes place through the material outlet, wherein the concentration of glass fiber is reduced by a factor 10 - 20. This measure is also known to those skilled in the art.

Further auxiliary materials can be added to the water used for production of the glass fiber/water dispersion. Here, it is usually thickening agents and surfactants. This measure is also known to those skilled in the art. Additionally, the B-stage capable binder system responsible for the reinforcement can be added to the water, so that measure (iv) can be cancelled wholly or at least partially.

The discharge of the fiber/water dispersion takes place to a circumferential Fourdrinier wire through which the water is sucked up and the wet-laid fiber fabric is formed (measure (iii)). The sucked up water is supplied again to the process, i.e. recycled. For the production of the wet-laid glass non-woven fabrics, known apparatuses are used, such as Voith Hydroformer^{®} or Sandy Hill Deltaformer^{®}, which are known in the market.

The weight per unit area of the non-woven fabric formed, in particular the non-woven glass fiber fabric formed, is between 20 and 500 g/m², preferably between 50 and 300 g/m², wherein these values refer to a non-woven glass fabric with binder and without taking into account the residual humidity, i.e. after drying and complete cross-linking of the binder.

The wet-laid non-woven fabric can also consist of mixtures of different fibers. Non-woven fabric, which consist of synthetic fibers, polymeric fibers and of glass fibers are particularly suitable. The glass fiber content is between 20 - 80 % by weight, in particular between 30 - 60 % by weight, wherein these values refer to the total weight of the non-woven fabric without binder.

### Binder

In measure (iv), a B-stage capable binder system is applied onto the wet-laid glass non-woven fabric, which has just been formed and still is on the circumferential Fourdrinier wire. Excess binder can be sucked up via the Fourdrinier wire, so that the binder system is available uniformly distributed in the glass non-woven fabric.

Here, it has proved that when using B-stage binders and with low binder application, no sufficient stability of the non-woven glass fiber fabric can be achieved, so that they can not be produced in this way. Missing longitudinal and transverse strengths lead to rupture of the non-woven fabric, to delamination during winding or even to decomposition of the non-woven structure, but at least to extreme product inhomogenities and thus to significant loss in yield.

To avoid said problems, a B-stage capable binder system is used. The B-stage capable binder system according to the invention comprises (i) at least one B-stage capable binder and (ii) one further self-cross-linking binder, preferably a thermally cross-linking binder.

The applied quantity of the B-stage capable binder system in measure (iv) is at most 20 % by weight, preferably 15 % by weight, wherein the value refers to the total weight of the non-woven fabric after complete drying.

B-stage capable binders are understood to mean binders that are only partially consolidated or hardened, i.e. are available in the B-stage state, and can still experience a final consolidation, e.g., by thermal post-treatment. Such B-stage binders are described in detail in US-A-5,837,620, US-A-6,303,207 and US-A-6,331,339. The B-stage binders disclosed therein are also an object of the present invention. B-stage binders are preferably binders based on furfuryl alcohol formaldehyde resins, phenol formaldehyde resins, melamine formaldehyde resins, urea formaldehyde resins and mixtures thereof. Preferably, these are aqueous systems. Further preferred binder systems are formaldehyde-free binders. B-stage binders are characterized in that they can be subjected to a multistage hardening, that is, they still have a sufficient binding action after the first hardening or after the first hardenings (B-stage state) so that they can be used for the further processing. Such binders are usually hardened in one step after the addition of a catalyst at temperatures of ca. 350 °F.

In order to form the B-stage, such binders are optionally hardened after the addition of a catalyst. The amount of hardening catalyst is up to 10% by weight, preferably 0.1 to 5% by weight (based on the total binder content). For example, ammonium nitrate as well as organic aromatic acids, e.g., maleic acid and p-toluenesulfonic acid, are suitable as hardening catalyst since it allows the B-stage state to be reached quicker. In addition to ammonium nitrate, maleic acid and p-toluenesulfonic acid, all materials are suitable as hardening catalyst that have a comparable acidic function. In order to reach the B-stage, the textile fabric impregnated with the binder is dried under the influence of temperature without producing a complete hardening. The necessary process parameters are dependent on the binder system selected.

The lower temperature limit can be influenced by the selection of the duration or by adding more or stronger acidic hardening catalysts.

B-stage binders based on urea formaldehyde (UF), melamine formaldehyde (MF), epoxide, or mixtures of UF binders and MF binders are particularly preferred.

Self-cross-linking binders are binders, which completely react through chemically without any additive of a catalyst. The cross-linking is preferably induced thermally. It has proved that, in particular aqueous polymer dispersions, polymer dispersions of vinyl acetate and ethylene, or similar self-cross-linking, in particular thermally self-cross-linking binders are suitable. Acrylate binders are particularly suitable.

The content of the self-cross-linking binder in the B-stage capable binder system is at most 20 % by weight, preferably at most 15 % by weight and particularly preferably at most 10 % by weight, wherein the values refer to the B-stage capable binder system (B-stage binder and self-cross-linking binder), without taking into account the residual humidity, i.e. after drying and complete cross-linking of the binder,

The content of the self-cross-linking binder in the B-stage capable binder system is at least 2 % by weight, preferably at least 5 % by weight, wherein the values refer to the B-stage capable binder system (B-stage binder and self-cross-linking binder), without taking into account the residual humidity, i.e. after drying and complete cross-linking of the binder.

The application of the B-stage capable binder system can take place by means of known methods. In addition to spraying, impregnating and pressing, the binder can also be applied by coating or by means of rotary nozzle heads. Furthermore, foam application is also possible.

The drying in measure (v) takes place at temperatures between 90°C and 200°C max., wherein the dwell time in the dryer is typically between 30 and 60 seconds for the aforementioned temperature range. The drying according to measure (v) effects that the B-stage capable binder hardens at least partially, but not completely, and the additional, self-cross-linking binder is completely hardened.

The degree of hardening of the B-stage binder is usually determined through measurement of the condensation humidity, which is produced during complete hardening.

The residual humidity is determined as relative change in weight of a sample at a temperature of 170°C for 2 minutes. A complete hardening leads to residual humidity of less than 1%. Incompletely cross-linked binders, i.e. binders in the B-stage state, show in the non-woven fabrics produced according to the invention a residual humidity of between 1% and 5%, preferably between 1.5% and 4%.

Alternatively, it is possible to determine the degree of hardening using the tensile strength of the non-woven fabric. A complete hardening of the B-stage capable binder system is supposed at a tensile strength of at least 95% or more of the highest possible tensile strength. The drying in measure (v) has the effect that the B-stage binder is not yet completely cross-linked and the non-woven fabric has a tensile strength of less than 20% of the highest possible tensile strength (gem. DIN EN 29073T3).

For drying of the wet-laid glass non-woven fabric, known drying apparatuses are used.

The wet-laid glass non-woven fabric produced by means of the method according to the invention have a low binder content. The content of all binders is at most 20 % by weight in relation to the total weight of the non-woven fabric. Preferably, the content of all binders is between 5 % by weight and 15 % by weight. Preferably, the wet-laid non-woven fabric produced by means of the method according to the invention, in particular glass non-woven fabrics, exclusively contain the B-stage capable binder system used according to the invention and no further additional binder.

The winding of the finished wet-laid glass non-woven fabric takes place by means of known methods.

The above-mentioned preferred ranges for fiber length, fiber diameter, fiber weight, binder and porosity can be combined freely, independently of each other, and any possible combination of the respectively preferred ranges is thus explicitly part of the present description.

### Reinforcement

The wet-laid non-woven glass fiber fabric produced by means of the method according to the invention method can additionally have further reinforcement.

The supply of planar reinforcement typically takes place on the top side of the circumferential Fourdrinier wire on which the wet-laid non-woven glass fiber fabric is formed.

The supply of reinforcement fibers and/or yarns takes place as in the case of planar reinforcement or individually, i.e. from above or the side, wherein the reinforcement fibers and/or yarns are incorporated centrally in the non-woven fabric formed or on the top side and/or underside. The assembly position results from the exact positioning of in the area of non-woven formation on the Fourdrinier wire. Finally, restrictions merely apply due to the type of construction of the non-woven makers used.

Reinforcements include preferably reinforcing filaments and/or yarns whose Young module is at least 5 GPa, preferably at least 10 GPa, particularly preferred at least 20 GPa.

The reinforcing filaments, i.e. the monofilaments, rovings as well as the yarns have a diameter between 0.1 and 1 mm or 10 - 2400 tex, preferably 0.1 and 0.5 mm, particularly 0.1 and 0.3 mm and have an elongation at rupture of 0.5 to 100 %, preferably 1 to 60 %.

Filaments, in particular multifilaments and/or monofilaments on the basis of polyester, aramids, preferably so-called high-modulus aramids, carbon, glass, glass rovings, mineral fibers (basalt), high-strength polyester monofilaments or multifilaments, high-strength polyamide monofilaments or multifilaments, as well as so-called hybrid multifilament yarns (yarns containing reinforcing fibers and lower-melting binding fibers) or wires (monofilaments) composed of metals or metal alloys, are preferably used as reinforcing filaments. The selection of the material is predefined through the drying temperatures in measure (v).

For economic reasons, preferred reinforcements consist of glass multifilaments in the form of - essentially - parallel warp sheets or scrims. In most cases, the glass non-woven fabrics are reinforced in the longitudinal direction by - essentially - parallel warp sheets.

The reinforcement filaments can be used arranged as net, lattice or scrim. Reinforcements with reinforcing yarns running parallel to each other, that is warp sheets, as well as scrims or lattice fabrics are preferred.

Depending on the wanted property profile, the density of the filaments may vary in wide limits. Preferably the filament density is between 20 and 250 filaments per meter. The filament density is measured vertically to the running direction. The reinforcement filaments are preferably supplied prior to the formation of the glass non-woven fabric on the top side of the circumferential Fourdrinier wire. It is, however, possible to supply the filaments during the formation of the glass non-woven fabric, so that they are incorporated.

### Examples

Non-woven glass fiber fabrics are produced by means of the usual wet laid method. The glass fibers used are 13µ E-glass fibers with a length of 18mm. The formation of the non-woven fabric is followed by the binder application using a MF binder (Madurit MW 830 by the company INEOS) while adding an hardener (0.3% Deuracure KF by the company Deurawood). Then, the drying takes place at 120°C for 35 sec in a furnace. The strengths were measured according to DIN EN 29073T3 with samples with a width of 5 cm.The residual humidity was determined after the drying in the furnace on the final product. The wet strength of the non-woven fabric is determined on test items at room temperature (approx. 21°C) after 10 min. of watering in the water bath according to DIN EN 29073T3.

### Example 1 (comparison):

Total area weight of the non-woven fabric: 240g/m²
Binder: 100% MF
Binder content (ignition losses): 15%.
Tensile strength (longitudinally): 11 N/5cm
Tensile strength (transversally): 8 N/5cm
Wet strength: not measurable
Residual humidity: 2.8%

### Example 2 (according to the invention):

Total area weight of the non-woven fabric: 240g/m²
Binder: 95% MF + 5% Acronal
Binder content (ignition losses): 15%.
Tensile strength (longitudinally): 202 N/5cm
Tensile strength (transversally):
Wet strength: 1.75 N/5 cm
Residual humidity: 2.52%

### Example 3 (according to the invention):

Total area weight of the non-woven fabric: 240g/m²
Binder: 90% MF + 10% Acronal
Binder content (ignition losses): 15%.
Tensile strength (longitudinally): 269 N/5cm
Tensile strength (transversally): 8 N/5cm
Wet strength: 1.11 N/5cm
Residual humidity: 2.08%

## Claims

1. A continuous method for producing wet-laid non-woven fabrics, comprising the measures of:
(i) dispersing fibers in water,
(ii) applying the fibers dispersed in water onto the top side of a circumferential Fourdrinier wire,
(iii) formation of a wet-laid non-woven fabric through sucking up of the available water from the underside of the circumferential Fourdrinier wire,
(iv) applying a binder and, if necessary, removing of excess binder,
(v) partially drying and partially cross-linking the non-woven fabric impinged with binder,
(vi) rolling up the fabric web received,
**characterized in that**
(vii) the binder according to measure (iv) is a B-stage capable binder system and the B-stage capable binder system according to measure (v) is brought to a B-stage state and
(viii) the applied quantity of the B-stage capable binder system in measure (iv) is at most 20 % by weight, preferably 15 % by weight, wherein the value refers to the total weight of the non-woven fabric after complete drying, and
(ix) the B-stage capable binder system comprises at least one B-stage capable binder and one further self-cross-linking binder.

2. The method according to Claim 1, **characterized in that** the fibers are discontinued fibers selected from the group of natural fibers, fibers made of synthetized polymers, fibers made of natural polymers, ceramic fibers, carbon fibers, mineral fibers, glass fibers or mixture of two or more of the aforementioned fibers.

3. The method according to Claim 1 or 2, **characterized in that** the fibers are glass fibers, preferably made of A-glass, E-glass, S-glass, C-glass, T-glass or R-glass.

4. The method according to Claim 1 or 2, **characterized in that** the fibers are mineral and ceramic fibers, preferably aluminosilicate fibers, ceramic fibers, Dolomit fibers, wollastonite fibers or fibers of vulcanites, in particular basalt fibers, diabase fibers and/or melaphyre fibers.

5. The method according to Claim 3 or 4, **characterized in that** the fibers have an average length of between 5 and 120 mm, preferably 10 to 90 mm.

6. The method according to Claim 3, 4 or 5, **characterized in that** the fibers have an average fiber diameter of between 5 and 30 µm, preferably between 8 and 24 µm.

7. The method according to one or more of the claims 1 to 6, **characterized in that** the weight per unit area of the non-woven fabric is between 20 and 500 g/m², preferably between 50 and 300 g/m², wherein these values refer to a non-woven fabric with binder and without taking into account the residual humidity, i.e. after drying and complete cross-linking of the binder.

8. The method according to Claim 7, **characterized in that** the non-woven fabric is glass non-woven fabric.

9. The method according to Claim 7 or 8, **characterized in that** the non-woven fabric is a glass non-woven fabric, whose glass fiber content is between 20 - 80 % by weight, preferably between 30 - 60 % by weight, wherein these values refer to the total weight of the non-woven fabric without binder.

10. The method according to one or more of the claims 1 to 9, **characterized in that** the B-stage capable binder in the B-stage capable binder system is a binder based on urea formaldehyde (UF), melamine formaldehyde (MF), epoxide, or mixtures of UF binders and MF binders.

11. The method according to one or more of the claims 1 to 10, **characterized in that** the self-cross-linking binder in the B-stage capable binder system comprises aqueous acrylate dispersions and/or polymer dispersions of vinyl acetate and ethylene.

12. The method according to one or more of the claims 1 to 11, **characterized in that** the content of the self-cross-linking binder in the B-stage capable binder system is at most 20 % by weight, preferably at most 15 % by weight and in particular at most 10 % by weight, wherein the values refer to the B-stage capable binder system (B-stage binder and self-cross-linking binder), without taking into account the residual humidity, i.e. after drying and complete cross-linking of the binder.

13. The method according to one or more of the claims 1 to 12, **characterized in that** the content of the self-cross-linking binder in the B-stage capable binder system is at least 2 % by weight, preferably at least 5 % by weight, wherein the values refer to the B-stage capable binder system (B-stage binder and self-cross-linking binder), without taking into account the residual humidity, i.e. after drying and complete cross-linking of the binder.

14. The method according to one or more of the claims 1 to 13, **characterized in that** the drying in measure (v) takes place at temperatures between 90°C and 200°C max., the residual humidity of the B-stage binder is at least 1%, preferably between 1% and 5%, and the additional, self-cross-linking binder completely hardens.

15. The method according to one or more of the claims 1 to 14, **characterized in that**, on the top side of the circumferential Fourdrinier wire on which the formation of the wet-laid non-woven fabric occurs, further planar reinforcement is additionally applied, which reinforcement remains in the non-woven fabric.

16. The method according to one or more of the claims 1 to 14, **characterized in that** during the formation of the wet-laid non-woven fabric, reinforcement filaments and/or yarns are applied and said reinforcement filaments and/or yarns are incorporated centrally or on the top side and/or underside of the wet-laid non-woven fabric formed and remain in the non-woven fabric.

17. A wet-laid non-woven fabric with a weight per unit area of between 20 and 500 g/m², preferably between 50 and 300 g/m², comprising:
(i) discontinuous fibers,
(ii) at most 20 % by weight, preferably 15 % by weight, of a B-stage capable binder system, wherein the value refers to the total weight of the non-woven fabric after complete drying,
(iii) the B-stage capable binder system comprises at least one B-stage capable binder and one further self-cross-linking binder,
(iv) the content of the self-cross-linking binder in the B-stage capable binder system is at most 20 % by weight, preferably at most 15 % by weight and in particular at most 10 % by weight, wherein the values refer to the B-stage capable binder system (B-stage binder and self-cross-linking binder), without taking into account the residual humidity, i.e. after drying and complete cross-linking of the binder,
(v) the content of the self-cross-linking binder in the B-stage capable binder system is at least 2 % by weight, preferably at least 5 % by weight, wherein the values refer to the B-stage capable binder system (B-stage binder and self-cross-linking binder), without taking into account the residual humidity, i.e. after drying and complete cross-linking of the binder,
(vi) the residual humidity of the B-stage capable binder is at least 1%, preferably between 1% and 5%,
(vii) the additional, self-cross-linking binder is completely hardened.

18. Use of the non-woven fabric according to Claim 17 for producing composite materials, in particular multi-layer composite materials.

## Patentansprüche

1. Kontinuierliches Verfahren zum Herstellen von nassgelegten Vliesen, folgende Schritte umfassend:
(I) Dispergieren von Fasern in Wasser,
(II) Aufbringen der in Wasser dispergierten Fasern auf die Oberseite eines umlaufenden Fourdrinier-Siebes,
(III) Bilden eines nassgelegten Vlieses durch Absaugen des vorhandenen Wassers von der Unterseite des umlaufenden Fourdrinier-Siebes,
(IV) Aufbringen eines Bindemittels und, falls nötig, Entfernen des überschüssigen Bindemittels,
(V) teilweises Trocknen und teilweises Vernetzen des mit Bindemittel behandelten Vlieses,
(VI) Aufwickeln der entstandenen Vliesbahn,
**dadurch gekennzeichnet, dass**
(VII) das Bindemittel gemäß Schritt (IV) ein zu einem B-Zustand fähiges Bindemittelsystem und das zu einem B-Zustand fähige Bindemittelsystem gemäß Schritt (V) in einen B-Zustand gebracht wird und
(VIII) die in Schritt (IV) aufgebrachte Menge des zu einem B-Zustand fähige Bindemittelsystem höchstens 20 Gew.-%, vorzugsweise 15 Gew.-% beträgt, wobei sich der Wert auf das Gesamtgewicht des Vlieses nach vollständiger Trocknung bezieht, und
(IX) das zu einem B-Zustand fähige Bindemittelsystem mindestens ein zu einem B-Zustand fähiges Bindemittel und ein weiteres selbstvernetzendes Bindemittel umfasst.

2. Verfahren nach Anspruch 1, **dadurch gekennzeichnet, dass** die Fasern unterbrochene Fasern sind, die aus der Gruppe aus natürlichen Fasern, Fasern aus synthetischen Polymeren, Fasern aus natürlichen Polymeren, Keramikfasern, Kohlenstofffasern, Mineralfasern, Glasfasern oder einer Mischung aus zwei oder mehr der genannten Fasern ausgewählt werden.

3. Verfahren nach Anspruch 1 oder 2, **dadurch gekennzeichnet, dass** die Fasern Glasfasern sind, die vorzugsweise aus A-Glas, E-Glas, S-Glas, C-Glas, T-Glas oder R-Glas bestehen.

4. Verfahren nach Anspruch 1 oder 2, **dadurch gekennzeichnet, dass** die Fasern Mineral- und Keramikfasern sind, vorzugsweise Aluminiumsilicatfasern, Keramikfasern, Dolomitfasern, Wollastonitfasern oder Fasern aus Vulkaniten, insbesondere Basaltfasern, Diabasfasern und/oder Melaphyrfasern.

5. Verfahren nach Anspruch 3 oder 4, **dadurch gekennzeichnet, dass** die Fasern eine durchschnittliche Länge zwischen 5 und 120 mm aufweisen, vorzugsweise zwischen 10 bis 90 mm.

6. Verfahren nach Anspruch 3, 4 oder 5, **dadurch gekennzeichnet, dass** die Fasern einen durchschnittlichen Faserdurchmesser zwischen 5 und 30 µm aufweisen, vorzugsweise zwischen 8 und 24 µm.

7. Verfahren nach einem oder mehreren der Ansprüche 1 bis 6, **dadurch gekennzeichnet, dass** das Flächengewicht des Vlieses zwischen 20 und 500 g/m² liegt, vorzugsweise zwischen 50 und 300 g/m², wobei sich diese Werte auf ein Vlies mit Bindemittel beziehen und die Restfeuchte, d. h. nach dem Trocknen und vollständigen Vernetzen des Bindemittels, nicht berücksichtigt ist.

8. Verfahren nach Anspruch 7, **dadurch gekennzeichnet, dass** das Vlies ein Glasfaservlies ist.

9. Verfahren nach Anspruch 7 oder 8, **dadurch gekennzeichnet, dass** das Vlies ein Glasfaservlies ist, dessen Glasfasergehalt zwischen 20 und 80 Gew.-% liegt, vorzugsweise zwischen 30 und 60 Gew.-%, wobei sich diese Werte auf das Gesamtgewicht des Vlieses ohne Bindemittel beziehen.

10. Verfahren nach einem oder mehreren der Ansprüche 1 bis 9, **dadurch gekennzeichnet, dass** das zu einem B-Zustand fähige Bindemittel im zu einem B-Zustand fähigen Bindemittelsystem ein Bindemittel ist, das auf Harnstoffformaldehyd (UF), Melaminformaldehyd (MF), Epoxid oder Mischungen von UF- und MF-Bindemitteln basiert.

11. Verfahren nach einem oder mehreren der Ansprüche 1 bis 10, **dadurch gekennzeichnet, dass** es sich bei dem selbstvernetzenden Bindemittel im zu einem B-Zustand fähigen Bindemittelsystem um wässrige Acrylatdispersionen und/oder Polymerdispersionen von Vinylacetat und Ethylen handelt.

12. Verfahren nach einem oder mehreren der Ansprüche 1 bis 11, **dadurch gekennzeichnet, dass** der Gehalt an selbstvernetzendem Bindemittel im zu einem B-Zustand fähigen Bindemittelsystem höchstens 20 Gew.-% beträgt, vorzugsweise höchstens 15 Gew.-% und insbesondere höchstens 10 Gew.-%, wobei sich die Werte auf das zu einem B-Zustand fähige Bindemittelsystem (zu einem B-Zustand fähiges Bindemittel und selbstvernetzendes Bindemittel) beziehen, ohne die Restfeuchte, d. h. nach dem Trocknen und vollständigen Vernetzen des Bindemittels, zu berücksichtigen.

13. Verfahren nach einem oder mehreren der Ansprüche 1 bis 12, **dadurch gekennzeichnet, dass** der Gehalt des selbstvernetzenden Bindemittels im zu einem B-Zustand fähigen Bindemittelsystem mindestens 2 Gew.-% beträgt, vorzugsweise mindestens 5 Gew.-%, wobei sich die Werte auf das zu einem B-Zustand fähige Bindemittelsystem (zu einem B-Zustand fähiges Bindemittel und selbstvernetzendes Bindemittel) beziehen, ohne die Restfeuchte, d. h. nach dem Trocknen und vollständigen Vernetzen des Bindemittels, zu berücksichtigen.

14. Verfahren nach einem oder mehreren der Ansprüche 1 bis 13, **dadurch gekennzeichnet, dass** das Trocknen in Schritt (V) bei Temperaturen zwischen 90 °C und max. 200 °C stattfindet, wobei die Restfeuchte des Bindemittels im B-Zustand mindestens 1 % beträgt, vorzugsweise zwischen 1 % und 5 % liegt, und das weitere, selbstvernetzende Bindemittel vollständig aushärtet.

15. Verfahren nach einem oder mehreren der Ansprüche 1 bis 14, **dadurch gekennzeichnet, dass** auf die Oberseite des umlaufenden Fourdrinier-Siebes, auf dem das Bilden des nassgelegten Vlieses stattfindet, zusätzlich eine weitere ebene Verstärkung aufgebracht wird, wobei die Verstärkung im Vlies verbleibt.

16. Verfahren nach einem oder mehreren der Ansprüche 1 bis 14, **dadurch gekennzeichnet, dass** während des Bildens des nassgelegten Vlieses Verstärkungsfilamente und/oder -garne aufgebracht werden und die Verstärkungsfilamente und/oder -garne zentral in oder an der Ober- und/oder Unterseite des gebildeten nassgelegten Vlieses eingebunden werden und im Vlies verbleiben.

17. Nassgelegtes Vlies mit einem Flächengewicht zwischen 20 und 500 g/m², vorzugsweise zwischen 50 und 300 g/m², Folgendes umfassend:
(I) unterbrochene Fasern,
(II) höchstens 20 Gew.-%, vorzugsweise 15 Gew.-% eines zu einem B-Zustand fähigen Bindemittelsystems, wobei sich der Wert auf das Gesamtgewicht des Vlieses nach vollständiger Trocknung bezieht,
(III) dass das zu einem B-Zustand fähige Bindemittelsystem mindestens ein zu einem B-Zustand fähiges Bindemittel und ein weiteres selbstvernetzendes Bindemittel umfasst,
(IV) dass der Gehalt des selbstvernetzenden Bindemittels im zu einem B-Zustand fähigen Bindemittelsystem höchstens 20 Gew.-% beträgt, vorzugsweise höchstens 15 Gew.-% und insbesondere höchstens 10 Gew.-%, wobei sich die Werte auf das zu einem B-Zustand fähige Bindemittelsystem (zu einem B-Zustand fähiges Bindemittel und selbstvernetzendes Bindemittel) beziehen, ohne die Restfeuchte, d. h. nach dem Trocknen und vollständigen Vernetzen des Bindemittels, zu berücksichtigen,
(V) dass der Gehalt des selbstvernetzenden Bindemittels im zu einem B-Zustand fähigen Bindemittelsystem mindestens 2 Gew.-% beträgt, vorzugsweise mindestens 5 Gew.-%, wobei sich die Werte auf das zu einem B-Zustand fähige Bindemittelsystem (zu einem B-Zustand fähiges Bindemittel und selbstvernetzendes Bindemittel) beziehen, ohne die Restfeuchte, d. h. nach dem Trocknen und vollständigen Vernetzen des Bindemittels, zu berücksichtigen,
(VI) dass die Restfeuchte des zu einem B-Zustand fähigen Bindemittels mindestens 1 % beträgt, vorzugsweise zwischen 1 % und 5 % liegt,
(VII) dass das weitere selbstvernetzende Bindemittel vollständig gehärtet ist.

18. Verwendung des Vlieses nach Anspruch 17 zur Herstellung von Verbundmaterialien, insbesondere für mehrschichtige Verbundmaterialien.

## Revendications

1. Procédé continu de production d'étoffes non tissées par voie humide, comprenant les mesures de:
(i) disperser les fibres dans l'eau,
(ii) appliquer les fibres dispersées dans l'eau sur le côté supérieur d'un fil Fourdrinier circonférentiel,
(iii) formation d'une étoffe non tissé par voie humide par l'absorption de l'eau disponible du côté inférieur du fil Fourdrinier circonférentiel,
(iv) appliquer un liant et, s'il est nécessaire, éloigner le liant en excès,
(v)sécher partiellement et réticuler partiellement l'étoffe non tissée pourvue à liant,
(vi) rouler l'étoffe reçue,
**caractérisé en ce que**
(vii) le liant selon la mesure (iv) est un système à liant capable d'étape B et le système à liant capable d'étape B selon la mesure (v) est amené à l'étape B et
(viii) la quantité appliquée du système à liant capable d'étape B dans la mesure (iv) est d'au moins 20% en poids, préférablement 15% en poids, où la valeur concerne le poids totale de l'étoffe non tissée après le séchage complète, et
(ix) le système à liant capable d'étape B comprend au moins un liant capable d'étape B et un autre liant auto réticulant.

2. Procédé selon la revendication 1, **caractérisé en ce que** les fibres sont des fibres discontinues sélectées du groupe formées de fibres naturelles, fibres faites de polymères synthétisées, fibres faites de polymères naturels, fibres céramique, fibres de carbone, fibres minérales, fibres de verre ou mélange de deux ou plusieurs d'entre les fibres mentionnées ci-dessus.

3. Procédé selon la revendication 1 ou 2, **caractérisé en ce que** les fibres sont des fibres de verre, faites préférablement de verre-A, verre-E, verre-S, verre-C, verre-T ou verre-R.

4. Procédé selon la revendication 1 ou 2, **caractérisé en ce que** les fibres sont des fibres minérales et céramiques, préférablement des fibres d'alumino-silicates, des fibres céramiques, des fibres de Dolomite, des fibres de wollastonite ou des fibres de vulcanites, en particulier fibres de basalte, fibres de diabase et/ou fibres de mélaphyre.

5. Procédé selon la revendication 3 ou 4, **caractérisé en ce que** les fibres ont une longueur moyenne entre 5 et 120 mm, préférablement 10 à 90 mm.

6. Procédé selon la revendication 3, 4 ou 5, **caractérisé en ce que** les fibres ont un diamètre moyen entre 5 et 30 µm, préférablement entre 8 et 24 µm.

7. Procédé selon l'une ou plusieurs des revendications 1 à 6, **caractérisé en ce que** le poids par l'unité de surface de l'étoffe non tissée est entre 20 et 500 g/m², préférablement entre 50 et 300 g/m², où ces valeurs concernent une étoffe non tissée avec liant et sans tenir compte de l'humidité résiduelle, c-à-d après le séchage et la réticulation complète du liant.

8. Procédé selon la revendication 7, **caractérisé en ce que** l'étoffe non tissée est l'étoffe non tissé en verre.

9. Procédé selon la revendication 7 ou 8, **caractérisé en ce que** l'étoffe non tissée est une étoffe non tissé en verre, dont la teneur en fibres de verre est entre 20 et 80% en poids, préférablement entre 30 et 60% en poids, où ces valeurs concernent le poids totale de l'étoffe non tissée sans liant.

10. Procédé selon l'une ou plusieurs des revendications 1 à 9, **caractérisé en ce que** le liant capable d'étape B dans le système à liant capable d'étape B est un liant basé sur l'urée formaldéhyde (UF), mélamine formaldéhyde (MF), époxyde, ou mélanges de liants UF et de liants MF.

11. Procédé selon l'une ou plusieurs des revendications 1 à 10, **caractérisé en ce que** le liant d'auto réticulation dans le système à liant capable d'étape B comprend les dispersions aqueuses d'acrylate et/ou les dispersions de polymères d'acétate de vinyle et d'éthylène.

12. Procédé selon l'une ou plusieurs des revendications 1 à 11, **caractérisé en ce que** la teneur du liant d'auto réticulation dans le système à liant capable d'étape B est au moins 20% en poids, préférablement au moins 15% en poids et en particulier au moins 10% en poids, où les valeurs concernent le système à liant capable d'étape B (le liant d'étape B et le liant d'auto réticulation), sans tenir compte de l'humidité résiduelle, c-à-d après le séchage et la réticulation complète du liant.

13. Procédé selon l'une ou plusieurs des revendications 1 à 12, **caractérisé en ce que** la teneur du liant d'auto réticulation dans le système à liant capable d'étape B est au moins 2% en poids, préférablement au moins 5% en poids, où les valeurs concernent le système à liant capable d'étape B (le liant d'étape B et le liant d'auto réticulation), sans tenir compte de l'humidité résiduelle, c-à-d après le séchage et la réticulation complète du liant.

14. Procédé selon l'une ou plusieurs des revendications 1 à 13, **caractérisé en ce que** le séchage dans la mesure (v) a lieu aux températures entre 90 °C et 200 °C maximum, l'humidité résiduelle du liant d'étape B est au moins 1%, préférablement entre 1% et 5%, et le liant additionnel, d'auto réticulation se durcit complètement.

15. Procédé selon l'une ou plusieurs des revendications 1 à 14, **caractérisé en ce que**, sur le côté supérieur du fil Fourdrinier circonférentiel sur lequel survient la formation de l'étoffe non tissée par voie humide, autre renforcement plane est appliqué par addition, lequel renforcement reste dans l'étoffe non tissée.

16. Procédé selon l'une ou plusieurs des revendications 1 à 14, **caractérisé en ce que**, pendant la formation de l'étoffe non tissée par voie humide, les filaments de renforcement et/ou les fils sont appliqués et lesdits filaments de renforcement et/ou les fils sont incorporés centralement ou sur le côté supérieur et/ou côté inférieur de l'étoffe non tissée par voie humide formée et restent dans l'étoffe non tissée.

17. Etoffe non tissée par voie humide avec un poids par l'unité de surface entre 20 et 500 g/m², préférablement entre 50 et 300 g/m², comprenant:
(i) des fibres discontinues,
(ii) au moins 20% en poids, préférablement 15% en poids, d'un système à liant capable d'étape B, où la valeur concerne le poids totale de l'étoffe non tissée après le séchage complète,
(iii) le système à liant capable d'étape B comprend au moins un liant capable d'étape B et un autre liant d'auto réticulation,
(iv) la teneur du liant d'auto réticulation dans le système à liant capable d'étape B est au moins 20% en poids, préférablement au moins 15% en poids, et en particulier au moins 10% en poids, où les valeurs concernent le système à liant capable d'étape B (le liant d'étape B et le liant d'auto réticulation), sans tenir compte de l'humidité résiduelle, c-à-d après le séchage et la réticulation complète du liant,
(v) la teneur du liant d'auto réticulation dans le système à liant capable d'étape B est au moins 2% en poids, préférablement au moins 5% en poids, où les valeurs concernent le système à liant capable d'étape B (le liant d'étape B et le liant d'auto réticulation), sans tenir compte de l'humidité résiduelle, c-à-d après le séchage et la réticulation complète du liant,
(vi) l'humidité résiduelle du liant capable d'étape B est au moins 1%, préférablement entre 1% et 5%,
(vii) le liant additionnel, d'auto réticulation est complètement durci.

18. Utilisation d'étoffe non tissée selon la revendication 17 pour produire les matériaux composites, en particulier les matériaux composites multi-couches.
